(19) Europäisches Patentamt

European Patent Office

Office européen des brevets

(11) Veröffentlichungsnummer: **0 239 666**
**A2**

(12) **EUROPÄISCHE PATENTANMELDUNG**

(21) Anmeldenummer: **86110713.4**

(22) Anmeldetag: **02.08.86**

(51) Int. Cl.⁴: **B01D 35/22**

(30) Priorität: **04.03.86 DE 3606993**

(43) Veröffentlichungstag der Anmeldung:
**07.10.87 Patentblatt 87/41**

(84) Benannte Vertragsstaaten:
**DE FR GB SE**

(71) Anmelder: **Firma Carl Freudenberg**
**Höhnerweg 4**
**D-6940 Weinheim/Bergstrasse(DE)**

(72) Erfinder: **Ruhland, Hans**
**Ziegelhüttenstrasse 5**
**D-6101 Reichelsheim(DE)**
Erfinder: **Kohlheb, Robert, Dr.**
**Andershauserstrasse 15**
**D-3352 Einbeck(DE)**

(74) Vertreter: **Weissenfeld-Richters, Helga, Dr.**
**Höhnerweg 2**
**D-6940 Weinheim/Bergstrasse(DE)**

(54) **Querstromfilter.**

(57) Ein Querstromfilter, umfassend eine von der zu reinigenden Flüssigkeit durchströmbare Vorkammer (4), die im wesentlichen parallel zu der Strömungsrichtung der Flüssigkeit auf der einen Seite von einer undurchlässigen Trennwand (1) und auf der anderen Seite von einer Filterschicht (2) begrenzt ist, wobei für die Zuführung der Flüssigkeit und die Abführung des zurückbleibenden Konzentrates Ein-und Auslaßöffnungen an den entgegengesetzten Enden der Vorkammer vorgesehen sind sowie ein Filtratsammelraum (3) mit einer Austrittsöffnung (7) auf der der Vorkammer gegenüberliegenden Seite der Filterschicht (2). Die Vorkammer weist einen sich zwischen der Ein-und der Auslaßöffnung (5,6) verengenden Querschnitt auf.

Fig. 1

## Querstromfilter

Die Erfindung betrifft einen Querstromfilter, umfassend eine von der zu reinigenden Flüssigkeit durchströmte Vorkammer, die im wesentlichen parallel zu der Strömungsrichtung der Flüssigkeit auf der einen Seite von einer undurchlässigen Trennwand und auf der anderen Seite von einer Filterschicht begrenzt ist, wobei für die Zuführung der Flüssigkeit und die Abführung des zurückbleibenden Konzentrates Ein-und Auslaßöffnungen an den entgegengesetzten Enden der Vorkammer vorgesehen sind sowie ein Filtratsammelraum mit einer Austrittsöffnung auf der der Vorkammer gegenüberliegenden Seite der Filterschicht.

Ein Querstromfilter der vorgenannten Art ist aus der DE-OS 25 29 614 bekannt. Die spezifische Leistung der Filterschicht ist dabei wenig ausgeglichen und häufig überlagert von einer unerwünschten Anlagerung ausgeschiedenen Konzentrates an der Oberfläche. Häufige Rückspülungen sind daher unverzichtbar und bedingen eine an sich nicht erwünschte Unterbrechung der Benutzung.

Der Erfindung liegt die Aufgabe zugrunde, ein Querstromfilter der eingangs genannten Art derart weiter zu entwickeln, daß sich eine deutlich verminderte Neigung zur Bildung von Konzentratsablagerungen an der Oberfläche der Filterschicht ergibt sowie eine Verbesserung der Filterleistung. Das erfindungsgemäße Querstromfilter soll hierdurch neben einer relativ verkleinerten Bauform mit einem deutlich reduzierten Aufwand an Rückspülungen betreibbar sein.

Diese Aufgabe wird erfindungsgemäß bei einem Querstromfilter der eingangs genannten Art dadurch gelöst, daß die Vorkammer einen sich zwischen der Ein-und Auslaßöffnung verengenden Querschnitt aufweist. Der sich in der Vorkammer durch die kontinuierliche Abscheidung von Filtrat durch die Filterschicht ergebende Volumenverlust wird hierdurch ausgeglichen, was es gestattet, die Einhaltung einer optimalen Strömungsgeschwindigkeit in allen Teilbereichen zwischen der Ein-und der Auslaßöffnung der Vorkammer sicherzustellen. Diese liegt im allgemeinen zwischen 1,5 und 3 m/sec. und verhindert bei Gewährleistung einer guten Filterleistung weitgehend die Entstehung störender Filtratablagerungen an der Oberfläche der Filterschicht. Die zur Erreichung diesen Zweckes optimale Durchströmungsgeschwindigkeit kann in Grenzen variieren. Sie ist neben der Art der zu reinigenden Flüssigkeit u. a. auch abhängig von der Art der zur Anwendung gelangenden Filterschicht. Einzelversuche sind daher häufig unverzichtbar, bereiten dem mit der Entwicklung von Querstromfiltern befaßten Fachmann indessen keine Schwierigkeiten.

Die Vorkammer kann zwischen der Ein-und der Auslaßöffnung in Sektionen unterteilt sein, wobei die einzelnen Sektionen einen in Richtung der Auslaßöffnung abgestuft verminderten Durchlaßquerschnitt haben. Herstellung und Reinigung entsprechend ausgebildeter Querstromfilter sind besonders einfach, weshalb sich solche Ausführungen insbesondere für eine großtechnische Anwendung empfehlen.

Bei einer besonders leicht zu reinigenden Ausführung der vorgenannten Art ist es vorgesehen, daß die die Vorkammer außenseitig abschließende Trennwand eine als Mutterngewinde gestaltete Oberfläche aufweist, daß die erhaben nach innen vorspringenden Gewindegänge des Mutterngewindes die Filterschicht dichtend berühren und daß das Mutterngewinde in den in Richtung der Auslaßöffnung aufeinanderfolgenden Sektionen eine abnehmende Gangzahl aufweist. Ein solches Querstromfilter ist im wesentlichen zylindrisch gestaltet, und nach dem Abnehmen wenigstens eines der das Querstromfilter stirnseitig verschließenden Flansche ist die Entnahme der hohlzylindrisch in sich geschlossenen Filterschicht leicht möglich. Die Gewindegänge liegen anschließend frei und können leicht gereinigt werden.

Nach einer weiteren Ausgestaltung ist es bei einer solchen Ausführung vorgesehen, daß der Querschnitt und der gegenseitige Abstand benachbarter Gänge des Mutterngewindes in allen Sektionen identisch ist. Neben einer vereinfachten Herstellbarkeit der Gänge wird hierdurch die Erzielung eines ausgeglichenen Strömungsprofils in allen Sektionen begünstigt.

Die Sektionen können bei einer hohlzylindrischen Ausbildung der die Vorkammer begrenzenden Teile auch radial ineinanderliegend angeordnet werden, wobei die Einlaßöffnung der äußersten und die Auslaßöffnung der innersten der Sektionen zugeordnet ist. Entsprechende Ausführungen des erfindungsgemäßen Querstromfilters können auch als Kompaktausführungen angesprochen werden. Sie weisen, bezogen auf das von Ihnen eingenommene Volumen, eine optimale Filterleistung auf.

Nach einer anderen Ausgestaltung ist es vorgesehen, daß die einzelnen Sektionen mit abgestuft unterschiedlichem Querschnitt des erfindungsgemäßen Querstromfilters durch Beruhigungszonen eines relativ erweiterten Querschnittes voneinander getrennt sind. Die Bildung von Strömungswirbeln in Bereich dieser kritischen Zonen wird dadurch unterdrückt, was sowohl im Hinblick auf die Gewährleistung einer gleichmäßigen Durchströmung der Vorkammer als auch im Hinblick auf die Vermeidung von Ablagerungen auf derselben von großem Vorteil ist.

Daneben sind auch Ausführungen des erfindungsgemäßen Querstromfilters denkbar, bei denen die Vorkammer zwischen der Ein-und der Auslaßöffnung einen gleichmäßig verminderten Querschnitt aufweist. Sie zeichnen sich durch eine optimale Filterleistung aus, erfordern aber neben einem vorgrößerten Herstellaufwand eine weitgehende Abstimmung der zur Anwendung gelangenden Filterschicht mit den Eigenschaften der zu reinigenden Flüssigkeit.

Zwei beispielhafte Ausführungen des erfindungsgemäßen Querstromfilters sind in der in der Anlage beigefügten Zeichnung längs geschnitten dargestellt. Sie werden nachfolgend näher erläutert. Es zeigen:

Figur 1 ein außenseitig zylindrisch begrenztes Querstromfilter, bei dem die einzelnen Sektionen der Vorkammer axial hintereinanderliegend angeordnet sind.

Figur 2 ein außenseitig zylindrisch begrenztes Querstromfilter, bei dem die einzelnen Sektionen der Vorkammer radial ineinanderliegend angeordnet sind.

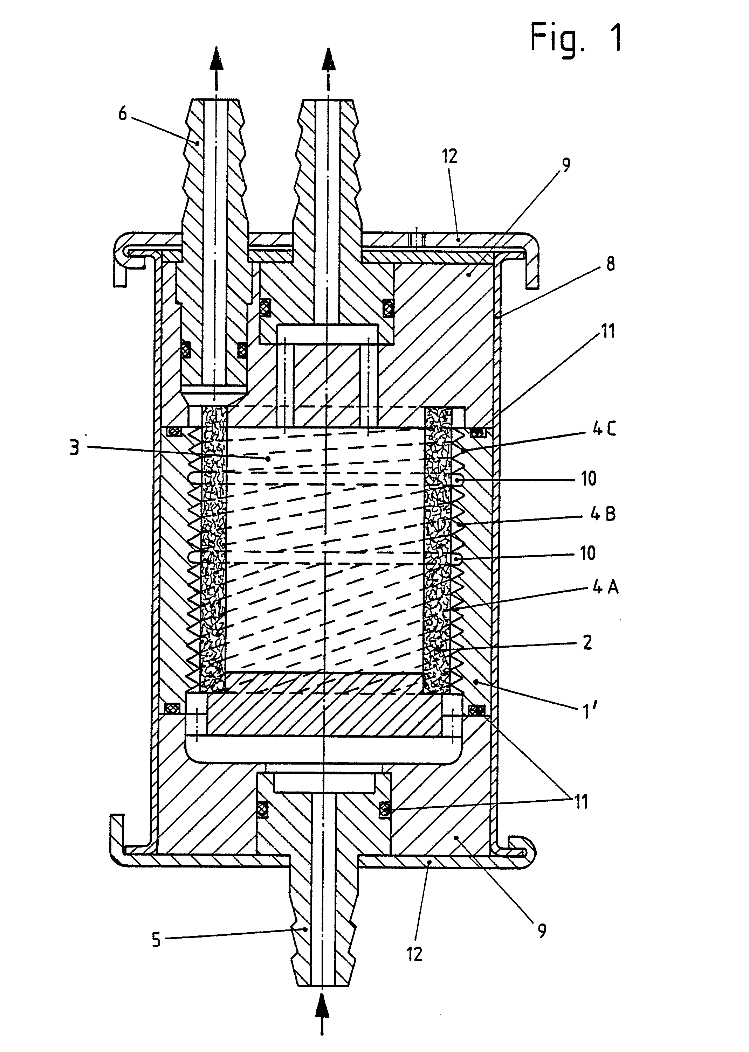

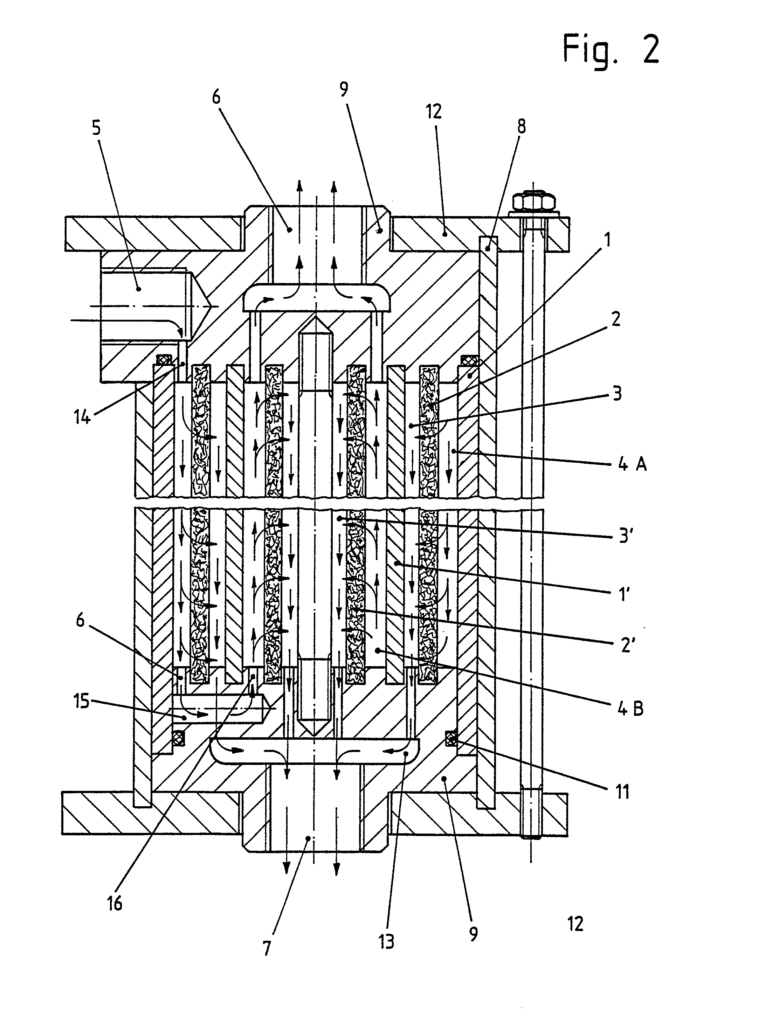

Bei den in den Figuren 1 und 2 gezeigten Querstromfiltern bestehen alle mit der zu reinigenden Flüssigkeit in Berührung kommenden Teile aus PTFE. Sie sind unter teilweiser Einfügung von Dichtringen in der dargestellten Form vereint und in einem metallischen Gehäuse eingeschlossen, bestehend aus einer zylindrisch ausgebildeten Montagehülse (8), deren stirnseitige Öffnungen durch Halteplatten 12 verschlossen sind. Die Einlaßöffnung für die zu reinigende Flüssigkeit ist mit 5 bezeichnet, die Auslaßöffnung für die von dem Filtrat befreite, nunmehr eingedickte Flüssigkeit mit 6 und die Auslaßöffnung für das gereinigte Filtrat mit 7. In beiden Fällen durchströmt die zu reinigende Flüssigkeit auf ihrem Weg zwischen der Einlaßöffnung zur Auslaßöffnung die Vorkammer 4, welche einen sich in Richtung der Auslaßöffnung 6 abgestuft vermindernden Querschnitt aufweist. Die so gebildeten, einzelnen Sektionen der Vorkammer sind mit 4A, 4B .... bezeichnet. Sie sind bei der Ausführung nach Figur 1 axial hintereinanderliegend angeordnet, bei der Ausführung nach Figur 2 radial ineinanderliegend.

Bei der Ausführung nach Figur 1 werden die einzelnen Sektionen 4A bis 4C durch die nach innen geöffneten Ausnehmungen der Gänge eines Mutterngewindes gebildet. Sie haben in allen drei Teilbereichen eine identische Querschnittsform und -größe. Die Gangzahl ist unterschiedlich. Das Mutterngewinde ist in der Sektion 4A dreigängig ausgebildet, in der Sektion 4B zweigängig und in der Sektion 4C eingängig, was durch die in Richtung der Auslaßöffnung 7 abnehmende Steigung und axiale Erstreckung der einzelnen Sektionen sichtbar wird. Sie sind durch die Beruhigungszonen 10 voneinander getrennt, um Wirbelbildungen und unerwünschte Ablagerungen in diesem kritischen Bereich zu vermeiden.

Zur Funktion ist folgendes auszuführen:

Die zu reinigende Flüssigkeit tritt über die Einlaßöffnung 5 in das Querstromfilter ein und wird über eine in dem Stirnflansch 9' befindliche Aussparung gleichmäßig der Vorkammer 4 zugeführt. Die zu reinigende Flüssigkeit steht hier unter einem Überdruck, bezogen auf den Druck in dem Filtratsammelraum, was dazu führt, daß Filtrat aus der zu reinigenden Flüssigkeit ausgeschieden wird und in den Filtratsammelraum gelangt. Hierdurch ergibt sich ein Volumenverlust in der Vorkammer 4, was ein Absinken der Strömungsgeschwindigkeit zur Folge hat. Dieses Absinken wird bei der erfindungsgemäßen Ausführung oberhalb eines unkritischen Wertes beendet durch Überleiten der zu reinigenden Flüssigkeit in die Sektion 4B der Vorkammer, in welcher der Strömungsquerschnitt durch die verminderte Gangzahl des in diesem Bereich die Vorkammer bildenden Mutterngewindes soweit reduziert ist, daß der Volumenverlust der zu reinigenden Flüssigkeit ausgeglichen und die ursprünglich vorhandene Geschwindigkeit wiederum erreicht wird. Auch im Bereich der Sektion 4B werden dadurch unerwünschte Ablagerungen an der Oberseite der Filterschicht weitgehend vermieden und es kommt zum weiteren Übertreten von Filtrat in den Filtratsammelraum 3. Hierdurch ergibt sich auch im Bereich der Sektion 4B ein in Richtung der Auslaßöffnung zunehmender Volumenverlust und damit wiederum ein Absinken der Strömungsgeschwindigkeit. Dieses wird wiederum oberhalb eines kritischen Wertes beendet durch Überleitung der zu reinigenden Flüssigkeit in die Sektion 4C der Vorkammer. Das diese Sektion bildende Mutterngewinde ist eingängig ausgebildet und in seinem Durchströmungsquerschnitt soweit reduziert, daß der nunmehr vorhandene, weitere Volumenverlust wiederum ausgeglichen und die ursprünglich vorhandene Geschwindigkeit wiederum erreicht wird. Auch im Bereich der Sektion 4C kommt es dadurch nicht zu den erwünschten Anlagerungen von Feststoffen an der Oberseite der Filterschicht. Die in der noch vorhandenen Restflüssigkeit enthaltenen Feststoffe be finden sich in derselben vielmehr in einem Schwebezustand und können das Querstromfilter kontinuierlich über die Auslaßöffnung 6 verlassen. Das gereinigte Filtrat verläßt das Querstromfilter über die Auslaßöffnung 7.

Bei der Ausführung nach Figur 1 umschließt die hohlzylinderisch ausgebildete eigenfeste Filterschicht 2 einen relativ großen Freiraum, der die Funktion des Filtratsammelraumes 3 hat, und in dieser Größe zur Erreichung des angestrebten Zweckes an sich nicht erforderlich ist. Es besteht daher die Möglichkeit, diesen Freiraum auch anderweitig zu nutzen in bezug auf die zusätzliche Unterbringung einer weiteren Sektion der Vorkammer. Eine solche Ausführung eines Querstromfilters ist in Figur 2 gezeigt. Sie ist dadurch gekennzeichnet, daß in einem Abstand von der Innenwandung der hohlzylindrisch ausgebildeten Filterschicht 2 eine weitere, hohlzylindrisch ausgebildete Trennwand 1' angeordnet ist, die die Sektion 4B des in seinem Querschnitt verminderten Teiles der Vorkammer außenseitig begrenzt. Dieser Teil wird innenseitig durch eine weitere, hohlzylindrisch ausgebildete Filterschicht 2' begrenzt, die den weiteren Filtratsammelraum 3' außenseitig umschließt. Der Filtratsammelraum 3' und der Filtratsammelraum 3 sind durch die Ausnehmung 13 des Stirnflansches 9' untereinander und mit der Auslaßöffnung 7 verbunden. Zur Funktion ist folgendes auszuführen:

Die zu reinigende Flüssigkeit wird durch die Einlaßöffnung und die Verteilerbohrung 14 der Sektion 4A der Vorkammer 4 zugeführt. Diese wird innenseitig durch die hohlzylindrisch in sich geschlossene Filterschicht 2 begrenzt, außenseitig durch die Trennwand 1. Die Länge in axialer Richtung ist so bemessen, daß die Strömungsgeschwindigkeit der zu reinigenden Flüssigkeit trotz des sich in der Sektion 4A ergebenden Volumenverlustes durch das abgeschiedene Filtrat nicht auf einen Wert absinkt, bei dem die Anlagerung von festen Bestandteilen an der Oberfläche der Filterschicht 2 befürchtet werden müßte.

Nach dem Verlassen der Sektion 4A der Vorkammer 4, gelangt die zu reinigende Flüssigkeit über die weiteren Verteilerbohrungen 15 und 16 in die Sektion 4B der Vorkammer 4. Diese ist radial innerhalb der Sektion 4A der Vorkammer angeordnet und hat dadurch trotz der identischen Spaltbreite in radialer Richtung einen abgestuft verminderten Durchtrittsquerschnitt. Eine sprunghafte Anhebung der Fließgeschwindigkeit der eintretenden, zu reinigenden Flüssigkeit auf das ursprüngliche Niveau ist hiervon die Folge und verhindert trotz der weiteren Filtratausscheidung durch die Filterschicht 2' eine störende Bildung von Schwebstoffablagerungen auf der Anströmfläche desselben. Die Schwebstoffe verbleiben damit in der Schwebe und verlassen in stark erhöhter Konzentration gemeinsam mit der noch vorhandenen Restflüssigkeit das Querstromfilter durch die Auslaßöffnung 6. Das gereinigte Filtrat verläßt das Querstromfilter durch die Auslaßöffnung 7.

Die in Figur 2 gezeigte Ausführung wird durch untereinander verschraubte Halteplatten 12 zusammengehalten, welche an die Stirnflansche 9,9' angepreßt sind. Eine vollständige Zerlegung nach dem Lösen der Verschraubung ist dadurch sehr leicht möglich und erlaubt neben der Reinigung auch einen bedarfsweisen Austausch der eingesetzten Filterschichten. Eine Anpassung an unterschiedliche Bedarfsfälle ist dadurch sehr leicht möglich, wobei auch Ausführungen denkbar sind, bei denen die Anzahl der in radialer Richtung nach innen aufeinanderfolgenden Sektionen 4 A, 4B .... variierbar ist.

## Ansprüche

1. Querstromfilter, umfassend eine von der zu reinigenden Flüssigkeit durchströmbare Vorkammer, die im wesentlichen parallel zu der Strömungsrichtung der Flüssigkeit auf der einen Seite von einer undurchlässigen Trennwand und auf der anderen Seite von einer Filterschicht begrenzt ist, wobei für die Zuführung der Flüssigkeit und die Abführung des zurückbleibenden Konzentrates Ein-und Auslaßöffnungen an den entgegengesetzten Enden der Vorkammer vorgesehen sind, sowie ein Filtratsammelraum mit einer Austrittsöffnung auf der der Vorkammer gegenüberliegenden Seite der Filterschicht, dadurch gekennzeichnet, daß die Vorkammer (4) einen sich zwischen der Ein-und der Auslaßöffnung (5,6) vergenden Querschnitt aufweist.

2. Querstromfilter nach Anspruch 1, dadurch gekennzeichnet, daß die Vorkammer (4) zwischen der Ein-und der Auslaßöffnung (5,6) in Sektionen (4A, 4B .....) unterteilt ist und daß die Sektionen einen in Richtung der Auslaßöffnung (6) abgestuft verminderten Querschnitt haben.

3. Querstromfilter nach Anspruch 2, dadurch gekennzeichnet, daß die die Vorkammer (4) außenseitig abschließende Trennwand eine als Mutterngewinde gestaltete Oberfläche aufweist, daß die erhaben nach innen vorspringenden Gänge des Mutterngewindes die Filterschicht (2) dichtend berühren und daß das Mutterngewinde in den in Richtung der Auslaßöffnung (6) aufeinander folgenden Sektionen eine abnehmende Gangzahl aufweist.

4. Querstromfilter nach Anspruch 3, dadurch gekennzeichnet, daß der Querschnitt und der gegenseitige Abstand benachbarter Gänge des Mutterngewindes in allen Sektionen identisch ist.

5. Querstromfilter nach Anspruch 1 bis 2, dadurch gekennzeichnet, daß die Sektionen (4A, 4B ....) bei einer hohlzylindrischen Ausbildung der die Vorkammer (4) begrenzenden Teile (1,2) radial ineinanderliegend angeordnet sind und daß die Einlaßöffnung (5) der äußersten und die Auslaßöffnung der innersten der Sektionen zugeordnet ist.

6. Querstromfilter nach Anspruch 5, dadurch gekennzeichnet, daß die Sektionen einander konzentrisch umschließen.

7. Querstromfilter nach Anspruch 2 bis 6, dadurch gekennzeichnet, daß die Sektionen (4A, 4B ....) durch Beruhigungszonen eines erweiterten Querschnittes getrennt sind.

8. Querstromfilter nach Anspruch 1, dadurch gekennzeichnet, daß die Vorkammer (4) zwischen der Ein-und Auslaßöffnung (5,6) einen gleichmäßig verminderten Querschnitt aufweist.

Fig. 1

Fig. 2